**Europäisches Patentamt**

**European Patent Office**

**Office européen des brevets**

(19)

(11) Veröffentlichungsnummer: **0 056 948**
**B1**

(12) **EUROPÄISCHE PATENTSCHRIFT**

(45) Veröffentlichungstag der Patentschrift:
03.07.85

(51) Int. Cl.⁴: **H 04 N 1/41**, G 06 K 9/66

(21) Anmeldenummer: **82100178.1**

(22) Anmeldetag: **13.01.82**

(54) **Bürokommunikationssystem.**

(30) Priorität: **20.01.81 DE 3101543**

(43) Veröffentlichungstag der Anmeldung:
**04.08.82 Patentblatt 82/31**

(45) Bekanntmachung des Hinweises auf die Patenterteilung:
**03.07.85 Patentblatt 85/27**

(84) Benannte Vertragsstaaten:
**AT CH DE FR GB LI SE**

(56) Entgegenhaltungen:
DE - A - 2 260 175
US - A - 4 091 424
US - A - 4 120 043

EVOLUTIONS IN COMPUTER COMMUNICATIONS,
PROCEEDINGS OF THE FOURTH INTERNATIONAL
CONFERENCE ON COMPUTER COMMUNICATION,
Kyoto, 26-29 September 1978, H. Inose, North Holland
Publishing Company, Amsterdam, New York, Oxford H.
KAIYOH et al.: "A character recognition communication
system", Seiten 565-569
WISSENSCHAFTLICHE BERICHTE
A.E.G.-TELEFUNKEN, Band 45, Nr. 1/2, 1972, Berlin, DE.
D. BECKER et al.:"Zur verstärkten Berücksichtigung
schlecht erkennbarer Zeichen in der Lernstichprobe",
Seiten 97-105

(73) Patentinhaber: **Licentia Patent-Verwaltungs-GmbH,
Theodor-Stern-Kai 1, D-6000 Frankfurt/Main 70 (DE)**

(72) Erfinder: **Doster, Wolfgang, Dr.-Ing., Lisztweg 10,
D-7901 Dornstadt (DE)**
Erfinder: **Kresser, Anton, Rosbacher Weg 18a,
D-6362 Wöllstadt 2 (DE)**
Erfinder: **Schürmann, Jürgen, Dr.-Ing.,
Brandenburgweg 113, D-7900 Ulm (DE)**

(74) Vertreter: **Schulze, Harald Rudolf, Dipl.-Ing. et al,
Licentia Patent-Verwaltungs-GmbH
Theodor-Stern-Kai 1, D-6000 Frankfurt/Main 70 (DE)**

(56) Entgegenhaltungen: (Fortsetzung)
ELEKTRONISCHE RECHENANLAGEN, Band 12, Nr. 4,
August 1970, München, DE. W. GOHRING: "Eingabe
handschriftlicher Zeichen über einen Bildschirm und ihre
Erkennung", Seiten 188-193
COMPUTERS AND DIGITAL TECHNIQUES, Band 2, Nr.
1, Februar 1979 I. ALEKSANDER er al.: "Guide to pattern
recognition using randomaccess memoires", Seiten
29-40

**Beschreibung**

Die Erfindung betrifft ein Bürokommunikationssystem zur Bearbeitung und/oder Übertragung von Bild- und Textdaten über ein Fernsprechnetz mit einem Telekopierer und einem Textumsetzer (Zeichenerkennungseinheit).

Aus dem Artikel von H. Kaiyoh, K. Komori und K. Nakajima: «A Character Recognition Communication System», Proceedings of the fourth International Conference on Computer Communication, Kyoto, 26.-29. September 1978, North-Holland Publishing Company-Amsterdam, New York, Oxford, Seiten 565–569 ist ein Nachrichten-übertragungssystem mit Zeichenerkennung bekannt, bei dem die von mehreren Telekopierern (Faksimilegeräten) abgetasteten Zeichen als Faksimiledaten über das Fernsprech- oder Datennetz zu einer Datenverarbeitungsanlage mit mehreren Computern übertragen werden. Die Datenverarbeitungsanlage enthält eine Steuereinheit (Terminal Interface Unit), die die einlaufenden Faksimiledaten entsprechend den mitübertragenen Kennziffern den diesen zugeordneten Zeichenerkennungseinheiten überträgt, die die erkannten umgesetzten Zeichen anschliessend sammelt und im Falle ordnungsgemässer Umsetzung die nunmehr von Computern verarbeitbaren Zeichen dem jeweiligen Computer zuführt oder andernfalls die Zeichen der aussendenden Stelle zwecks Korrektur zurücküberträgt.

Neuzeitliche Bürokommunikationssysteme bestehen aus einem Textverarbeitungsterminal und einem Telekopierer. Beide Geräte sind jedes für sich über eine Kommunikationsschnittstelle an ein Kommunikationsnetz angeschlossen. Dieses Kommunikationsnetz kann ein innerbetriebliches oder ein öffentliches Datennetz oder das bekannte Telefonnetz sein.

Das Textverarbeitungsterminal dient zur Manipulation, zur Aussendung und zum Empfang von Textdaten, wie sie beispielsweise von Fernschreibern bekannt sind. Es enthält einen Monitor zur Darstellung der empfangenen oder auszusendenden Schriftseiten, ein Speichermedium, z.B. eine Diskette, zur Abspeicherung der Textdaten, eine Tastatur zur Texteingabe und einen Mikroprozessor, der den Betriebsablauf des Textverarbeitungsterminals steuert.

Zur Aussendung der Textdaten werden die Schriftseiten über die Tastatur in das Textverarbeitungsterminal eingegeben, vom Speichermedium gespeichert und gleichzeitig auf dem Monitor dargestellt, so dass jederzeit vor der Aussendung noch Manipulationen (Umformulierungen, Umstellungen, Korrekturen) möglich sind.

Ist der Text in gewünschter Weise aufbereitet, was auf dem Monitor überprüft werden kann, so können über die Kommunikationsschnittstelle die Textdaten ausgesendet werden.

Beim Empfang von Textdaten laufen diese in das Speichermedium des Textverarbeitungsterminals ein und werden gleichzeitig oder nach beendeter Einspeicherung auf dem Monitor dargestellt. Von dort können die übertragenen Textdaten bei Bedarf über einen Drucker ausgegeben werden.

Bildliche Darstellungen, wie z.B. Zeichnungen werden vom Telekopierer (Faksimilegerät) aufgenommen oder ausgesendet. Hierzu wird die Bildvorlage in einer Ein/Ausgabe-Einheit eingelegt und von dieser automatisch abgetastet. Die dabei entstehenden unkomprimierten Bilddaten werden von einem Codierer in Gestalt vorzugsweise komprimierter Bilddaten über die Kommunikationsschnittstelle ausgegeben.

Beim Empfang von Bilddaten durchlaufen diese einen Decodierer, welcher die komprimiert empfangenen Bilddaten in die ursprünglichen Bilddaten umsetzt und sie der Ein/Ausgabe-Einheit zur Rekonstruktion übergibt.

Sollen nun mit Schreibmaschine oder Druckschrift beschriebene Seiten übertragen werden, so gibt es bei dem bekannten System zwei Möglichkeiten, entweder den Text manuell über die Tastatur in das Textverarbeitungsterminal einzugeben oder den Text über den Telekopierer als Bilddaten zu übertragen.

Das erste Verfahren ist sehr lohnintensiv und zeitraubend, das zweite Verfahren im Vergleich zur Textübertragung mit dem Textverarbeitungsterminal recht kostspielig.

Der Erfindung liegt die Aufgabe zugrunde, den Stand der Technik zu verbessern. Insbesondere soll die Möglichkeit geschaffen werden, bereits vorliegende Texte der Manipulation (redaktionelle Überarbeitung) durch textverarbeitende Systeme zugänglich zu machen und diese kostengünstig zu übertragen, z.B. in Zukunft über das Telexnetz der Deutschen Bundespost.

Die Aufgabe wird durch die im Anspruch 1 angegebene Erfindung gelöst. Die vorliegenden Texte werden nunmehr vom Telekopierer lediglich abgetastet und die unkomprimierten Textdaten einem Textumsetzer zugeführt, der mittels eines dem Schriftbild des Textes zugeordneten Klassifikators die eingegebenen Schriftzeichen erkennt und sie in Zeichen umsetzt, die denjenigen entsprechen, die beim Drücken der Tasten der Tastatur des Textverarbeitungsterminals entstehen. Diese Zeichendaten können mit Hilfe des Textverarbeitungsterminals überarbeitet und anschliessend abgespeichert und/oder übertragen werden. Dadurch, dass lediglich Textdaten statt Bilddaten übertragen werden, erfolgt die Übertragung mit wesentlich weniger Redundanz und damit schneller und billiger.

Vorteilhafte Weiterbildungen und Ausgestaltungen der Erfindung sind in den Unteransprüchen und in der nachfolgenden Erläuterung angegeben. Von der Zeichenerkennungseinheit des Textumsetzers falsch interpretierte Zeichen können vor der Übertragung am Monitor des Datenverarbeitungsterminals erkannt und über die Tastatur korrigiert werden. Zur Vermeidung grösserer Korrekturarbeiten ist es zweckmässig, den Klassifikator (die Klassifikatordaten) der jeweiligen Schrift anzupassen. Dies kann in vorteilhafter Weise dadurch geschehen, das der Klassifikatorspeicher als steckbare Einheit ausgebildet ist

und vor der Bearbeitung einer speziellen Schriftart der dieser Schriftart zugeordnete Klassifikatorspeicher in den Textumsetzer eingesetzt wird.

Ist der Klassifikatorspeicher als Schreib-Lese-Speicher ausgebildet, so können die am Textverarbeitungsterminal korrigierten Zeichendaten zur entsprechenden Korrektur der Klassifikatordaten des Schreib-Lese-Speichers im Textumsetzer herangezogen werden.

Die Klassifikatordaten unterschiedlicher Schriftarten können auch in verschiedenen Disketten des Textverarbeitungsterminals gespeichert sein und jeweils von dem Textverarbeitungsterminal zum Schreib-Lese-Speicher des Textumsetzers überspielt werden. Dadurch kann der Textumsetzer als sehr kleine bauliche Einheit realisiert werden, die entweder in den Telekopierer oder in das Textverarbeitungsterminal eingebaut werden kann.

Eine weitere vorteilhafte Variante zur Anpassung der Klassifikatordaten der jeweiligen Schriftart sieht vor, dass der Anwender eine oder mehrere Musterseiten der zu erkennenden Schriftart einem Speziallabor mittels seines Telekopierers überträgt. Das Speziallabor ermittelt die optimalen Klassifikatordaten und sendet diese als Textdaten dem Anwender zu, die bei diesem vom Textverarbeitungsterminal aufgenommen und damit über dessen Speichermedium oder direkt in den Klassifikatorspeicher des Textumsetzers einlaufen. Der Anwender erspart sich durch dieses Verfahren aufwendige, kostspielige und platzbeanspruchende Adaptionssysteme, die er nur in Ausnahmefällen braucht, da für die üblichen Schriftsätze zwei bis drei Klassifikatoren ausreichend sind.

Die Erfindung wird nun anhand von Ausführungsbeispielen und Zeichnungen näher erläutert.

Es zeigen im einzelnen:

Fig. 1 Blockschaltbild eines erfindungsgemässen Bürokommunikationssystems;

Fig. 2 Blockschaltbild des Textverarbeitungsterminals und des Textumsetzers zur Übernahme der Klassifikatordaten in den Klassifikatorspeicher;

Fig. 3 Blockschaltbild des Textverarbeitungsterminals und des Textumsetzers für schrittweise Adaption der Klassifikatordaten;

Fig. 4 Blockschaltbild eines erfindungsgemässen Bürokommunikationssystems mit Einbeziehung des Adaptionslabors.

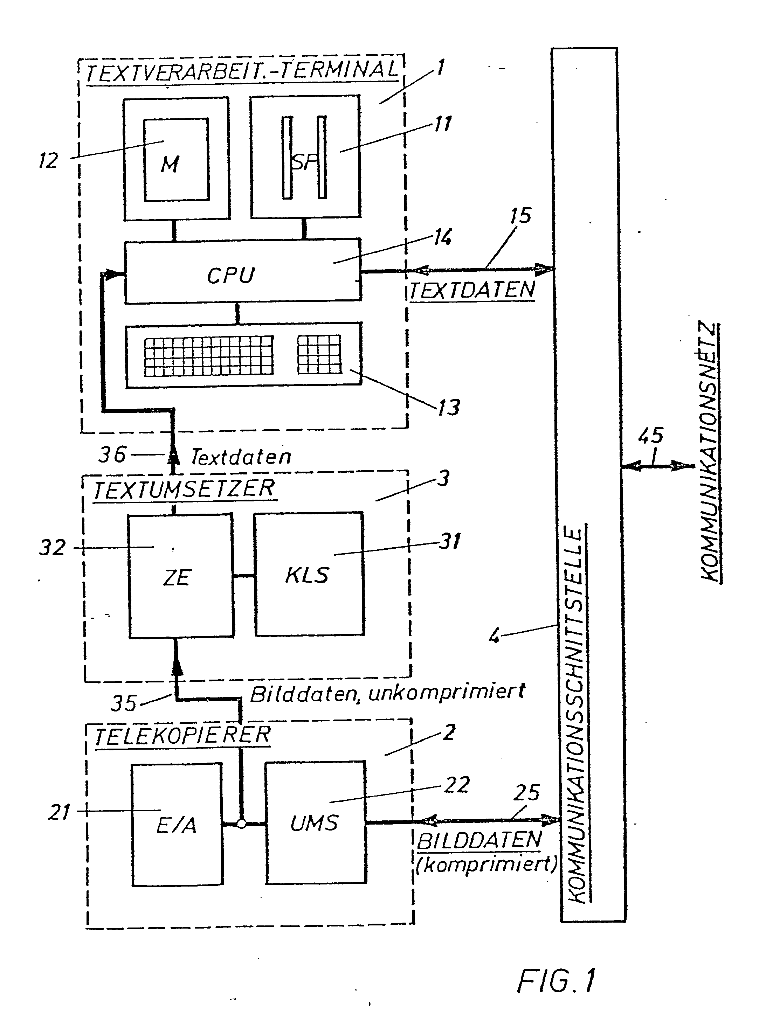

In Fig. 1 ist das Blockschaltbild eines Bürokommunikationssystems gemäss der Erfindung dargestellt. Es dient zur Übertragung von Bild- und Textdaten z.B. über ein Fernsprechnetz und besteht aus einem Textverarbeitungsterminal 1, einem Telekopierer 2 und einem Textumsetzer 3, der zwischen dem Textverarbeitungsterminal 1 und dem Textumsetzer 3 geschaltet ist. Das Textverarbeitungsterminal 1 und der Telekopierer 2 sind über je eine Anschlussleitung 15 bzw. 25 mit einer Kommunikationsschnittstelle 4 verbunden, welche die Datenübertragung über ein Kommunikationsnetz 45, in der Regel das öffentliche Fernsprechnetz, ermöglicht. Der Textumsetzer 3 hat die Aufgabe, vom Telekopierer 2 abgegebene Bilddaten von Textseiten mittels einer mit einem Klassifikatorspeicher 31 im Datenaustausch stehenden Zeichenerkennungseinheit 32 in Zeichendaten umzusetzen und die Zeichendaten zur Weiterverarbeitung an das Textverarbeitungsterminal 1 zu übergeben.

Beim Textverarbeitungsterminal 1 ist mit 12 der Monitor, mit 11 das Speichermedium, mit 13 die Texteingabetastatur und mit 14 der Mikroprozessor bezeichnet.

Der Telekopierer 2 besteht im wesentlichen aus der Ein/Ausgabe-Einheit 21 und dem Umsetzer 22 zur Codierung auszusendender Bilddaten oder zur Decodierung von ankommenden Bilddaten.

Die Funktion der genannten Einheiten wurde bereits eingangs erläutert und ist Stand der Technik. Neu am System ist der Textumsetzer 3, der im wesentlichen die Zeichenerkennungseinheit 32 und den Klassifikatorspeicher 31 umfasst.

Der Textumsetzer 3 wandelt Textdaten aus ihrer bildhaften Form in die codierte Darstellung der Daten- und Textverarbeitung um. Ausgangspunkt ist das Binärrasterbild, das der Telekopierer 2 erzeugt. Dabei ist es im Prinzip gleichgültig, ob der eigene oder ein über das Kommunikationsnetz 45 verbundener Telekopierer als Abtaster verwendet wird. Der Textumsetzer 3 liefert codierte Textdaten z.B. in gleicher Weise wie die Texteingabetastatur 13 an das Textverarbeitungsterminal 1 der eigenen Station. Dort können die Textdaten im Speichermedium 11 gespeichert werden und vom Monitor 12 dargestellt werden. Es ist dadurch möglich, die Textdaten vor ihrer Aussendung zu redigieren und zu kontrollieren. Vom Textverarbeitungsterminal 1 aus können dann die Textdaten auf den vorhandenen Wegen, also der Leitung 15 für die Textdaten, der Kommunikationsschnittstelle 4 und über das Kommunikationsnetz 45 an beliebige fremde Stationen übermittelt werden.

Um in der beschriebenen Weise arbeiten zu können, muss der Textumsetzer 3 mit einer Einrichtung zur Zeichenerkennung ausgestattet sein. Hierfür ist eine wesentliche Komponente, die Einzelzeichenerkennungseinheit 32, im folgenden mit Zeichenerkennungseinheit 32 bezeichnet, deren Parameter an die jeweils zu lesende Schriftart angepasst sein müssen. Die Datenmenge, die diesen Adaptionszustand beschreibt, wird als Klassifikator bezeichnet und ist im an die Zeichenerkennungseinheit 33 angeschlossenen Klassifikatorspeicher 31 gespeichert.

Es gibt verschiedene Arten von Klassifikatoren: Einfont-Klassifikator: Diese Daten sind für eine ganz bestimmte Schriftart ermittelt, die dadurch mit besonders hoher Zuverlässigkeit in Textdaten umgesetzt werden kann.

Mehrfont-Klassifikator: Mit diesen Daten kann eine bestimmte Auswahl verschiedener Schriftarten gelesen werden wie z.B. die üblichen geraden Schreibmaschinenschriften.

Je nach Anwendung braucht man verschiedene spezielle Klassifikatoren.

Üblicherweise wird der Klassifikator vom Hersteller des Textumsetzers geliefert. Er ist dann im allgemeinen in einem Festwertspeicher (ROM) abgelegt und mit diesem Bestandteil des Textumsetzers.

Für spezielle Anwendungen kann es zweckmässig sein, anstelle des vom Hersteller in der Grundausstattung mitgelieferten Mehrfont-Klassifikators einen spezialisierten Einfont-Klassifikator einzusetzen, beispielsweise beim Lesen von Textdokumenten mit ungewöhnlichen Schriften. Als steckbare Einheit ausgebildet, kann für die jeweilige Schriftart der günstigste Klassifikatorspeicher 31 eingesetzt werden.

Unter Umständen ist es vorteilhafter, die Klassifikatordaten in einem Schreib-Lese-Speicher (RAM) zu halten.Sie können dann durch Überschreiben des Speichers jederzeit durch andere Klassifikatordaten ersetzt werden.

Es gibt verschiedene Möglichkeiten, bei Verwendung eines Schreib-Lese-Speichers als Klassifikatorspeicher 31 den Klassifikator zur Station zu übermitteln, in der der Textumsetzer 3 arbeitet:

Beispielsweise kann der Klassifikatorspeicher vorteilhaft durch eine in das Textverarbeitungsterminal 1 als Speichermedium einsetzbare Klassifikatordaten enthaltende Diskete 11 geladen werden.

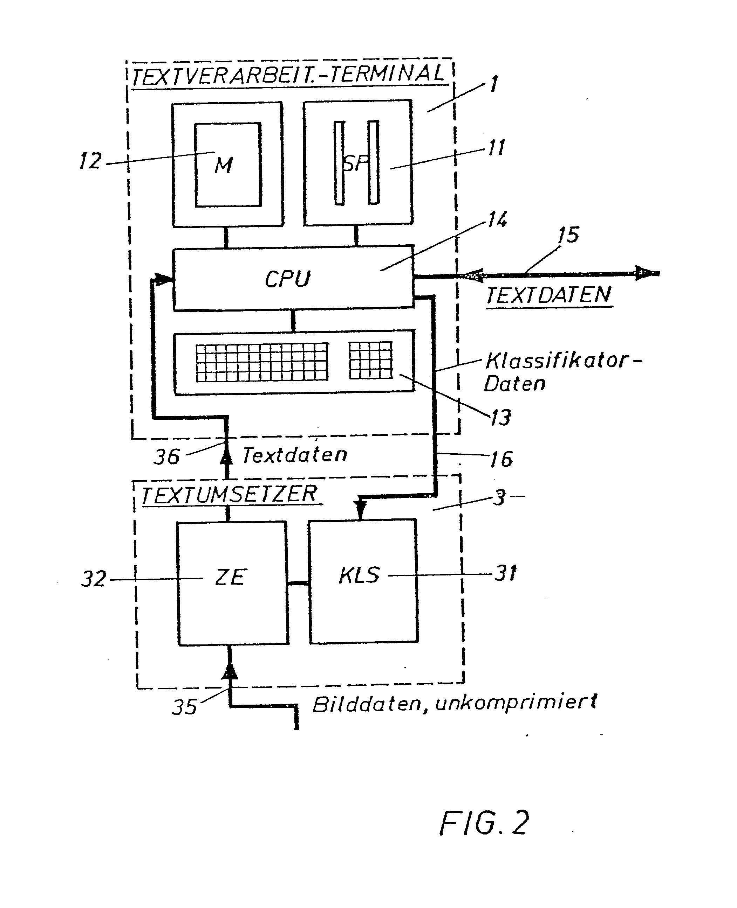

In Fig. 2 ist gezeigt, dass hierzu der Textumsetzer 3 einen weiteren Anschluss zum Laden des Klassifikatorspeichers 31 hat, so dass in diesem Fall der Klassifikatorspeicher 31 von der speziellen Diskete über den Mikroprozessor 14 und die Verbindungsleitung 16 geladen werden kann.

Der Klassifikator kann aber auch in zweckmässiger Weise über das Kommunikationsnetz und die Anschlussleitung 15 direkt von einer Versandstelle oder dem Hersteller des Textumsetzers übermittel werden. Die Klassifikatordaten laufen dann als Textdaten über Leitung 15 und den Mikroprozessor 14 des Textverarbeitungsterminals 1 und die Verbindungsleitung 16 in den Klassifikatorspeicher 31.

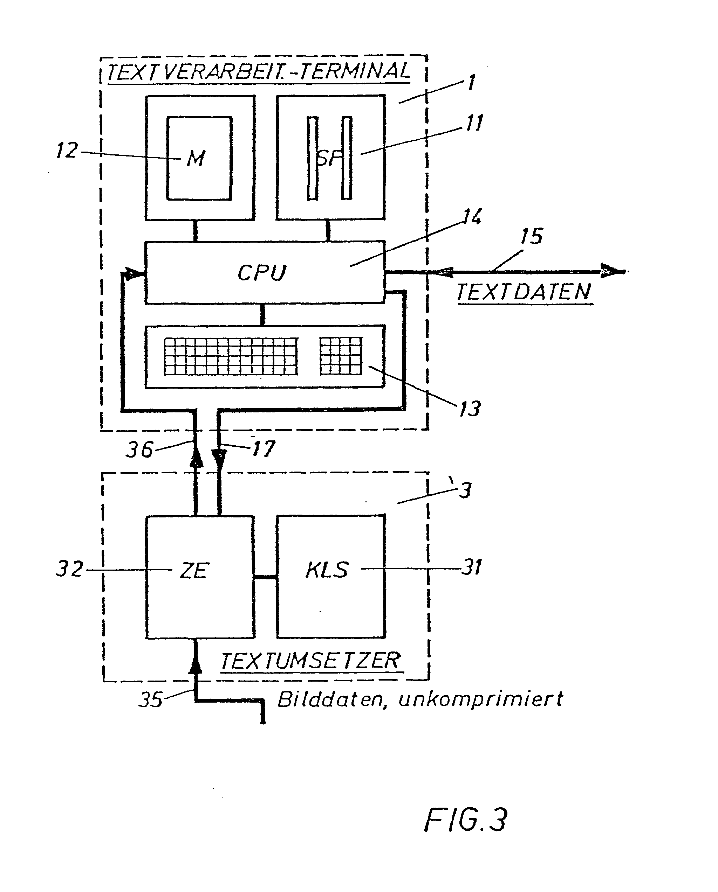

Vorteilhaft ist es aber auch, den Textumsetzer 3 mit einer Fähigkeit zur schritthaltenden Adaption auszustatten. Diese in Fig. 3 gezeigte Systemversion ist in der Lage, ausgehend von dem ursprünglichen Mehrfont-Klassifikator den eigenen Adaptionszustand in Richtung auf den spezialisierten Einfont-Klassifikator zu ändern. Der Benutzer muss dazu eine besondere Betriebsart, beispielsweise als «Mitlernen» bezeichnet, einstellen, wobei eine Verbindung 17 zwischen Mikroprozessor 14 und Zeichenerkennungseinheit 32 geschaltet wird, und den gesamten Betriebsablauf korrekt führen. Hierzu wird die am Monitor 12 wiedergegebene Textseite über die Tastatur 13 korrigiert, die zu lesende Textseite gegebenenfalls nochmals vom Telekopierer 2 abgetastet, und gleichzeitig werden die korrigierten Textdaten vom Textverarbeitungsterminal 1 über die Verbindungsleitung 17 der Zeichenerkennungseinheit 32 zugeführt. Die Korrektur des Klassifikators erfolgt dann in der Zeichenerkennungseinheit 32. Der korrigierte Klassifikator wird anschliessend in den Klassifikatorspeicher 31 abgelegt. Der Klassifikator ist damit an die zu lesende Schriftart angepasst, und die Übertragung vieler Textseiten in dieser Schriftart kann praktisch fehlerfrei durchgeführt werden.

Da eine Zeichenerkennungseinheit 32 für schritthaltende Adaption recht aufwendig und kostspielig ist und ausserdem nur selten ausgenutzt wird, ist es günstiger, die Aufgabe der Klassifikatoradaption als Dienstleistung, beispielsweise als Dienstleistung des Herstellers des Textumsetzers, der für diese Aufgabe ein spezielles Adaptionslabor betreibt, anzubieten.

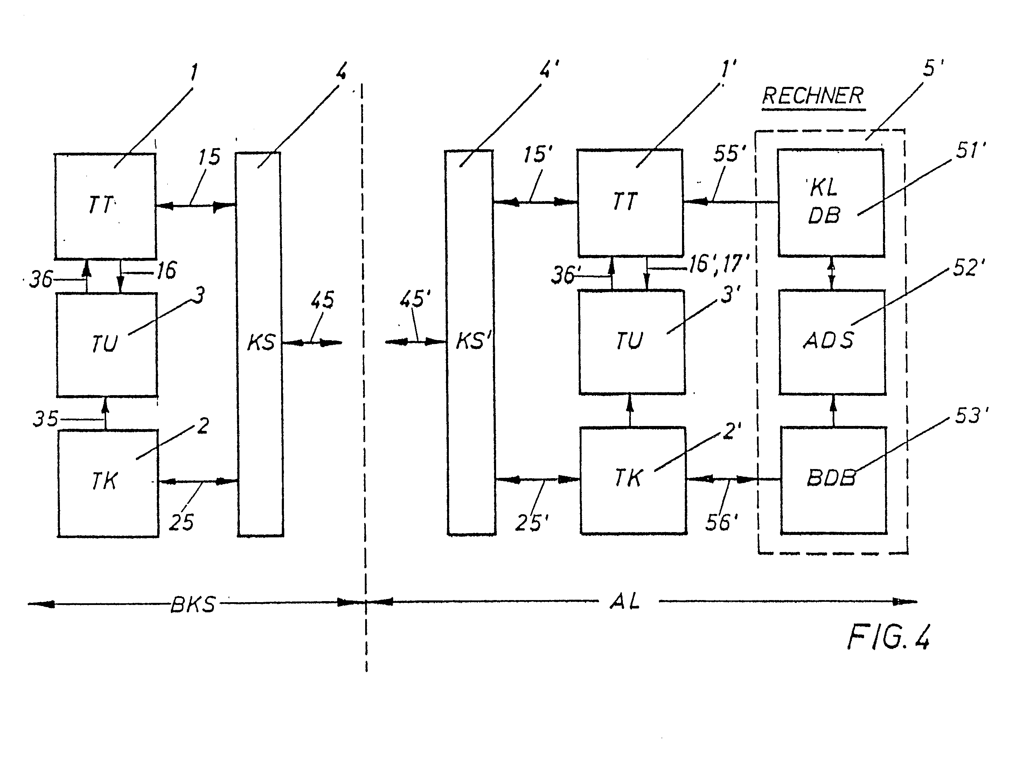

Fig. 4 zeigt eine vorteilhafte Variante des Bürokommunikationssystems, die die Dienstleistung eines Adaptionslabors AL verwendet. Die Benutzerseite ist hier mit BKS bezeichnet. Zwischen der Benutzerseite BKS und dem Adaptionslabor liegt das Kommunikationsnetz 45 bzw. 45'.

Auf der Benutzerseite sind erforderlich: das Textverarbeitungsterminal 1, der Textumsetzer 3, der Telekopierer 2 und die Kommunikationsschnittstelle 4. Der Klassifikatorspeicher im Textumsetzer 3 muss ein Schreib-Lese-Speicher sein, und zwischen Textverarbeitungsterminal 1 und Klassifikatorspeicher muss ein Datenweg 16, wie in Fig. 2 ausführlich dargestellt, vorhanden sein. Da in den Figuren gleiche Einheiten mit gleichen Bezugszeichen versehen sind, ist leicht erkennbar, dass die Benutzerseite BKS in Fig. 4 weitgehend dem in Fig. 1 gezeigten Bürokommunikationssystem mit der in Fig. 2 gezeigten Ausgestaltung entspricht.

Die Einheiten des Adaptionslabors AL sind zum Teil die gleichen wie auf der Benutzerseite. Gleiche Einheiten werden auch hier mit gleichen Bezugszeichen, jedoch zur Unterscheidung apostrophiert, versehen.

Wie die Benutzerseite, so besitzt auch das Adaptionslabor AL ein an eine Kommunikationsschnittstelle 4' angeschlossenes Textverarbeitungsterminal 1' und einem Telekopierer 2' sowie einen Textumsetzer 3'. Zusätzlich ist der Textumsetzer 3' über das Textverarbeitungsterminal 1' mit einer Datenverbindungsleitung 55' für Klassifikatordaten mit einer Klassifikatordatenbank 51' verbunden, die an ein rechnergestütztes Adaptionssystem 52' angeschlossen ist.

Ferner ist an den Telekopierer 2' und damit an den Textumsetzer 3' eine Verbindungsleitung 56' zu einem Speicher 53' für telekopierte Bilder angeschlossen, der ebenfalls mit dem rechnergestützten Adaptionssystem 52' in Verbindung steht.

Klassifikatordatenbank 51', Adaptionssystem 52' und Bilddatenbank (Bildspeicher) 53' werden üblicherweise in einem Rechnersystem 5' zusammengefasst.

Zweckmässigerweise wird der Textumsetzer 3', wie bereits zu Fig. 2 beschrieben, so ausgebildet, dass er eine schritthaltende Adaption ermöglicht.

Die angegebene Konfiguration von Systemkomponenten erlaubt eine vielfältige Nutzung. So kann auf Anfrage des Benutzers nach Übermittlung einer oder mehrerer Probeseiten an das Adaptionslabor ein Klassifikatorspezialist, falls ihm die Schriftart bekannt ist, einen geeigneten Klassifikator aus einer Klassifikatorbibliothek auswählen. Er kann, falls erforderlich, eine schritthaltende Adaption durchführen und so den vorhandenen Klassifikator mittels des speziell hierfür ausgebildeten Textumsetzers 3' schnell optimal an die vorliegende Schriftart anpassen. Falls jedoch die Schriftart in der Klassifikatorbibliothek nicht vorrätig ist, kann er aber auch eine vollständige Klassifikatoradaption oder Klassifikatoriteration über das rechnergestützte Adaptionssystem 52' durchführen.

Der ermittelte Klassifikator kann, gegebenenfalls nach einer Erprobung in den Einheiten 1', 2' und 3' des Adaptionslabors, dem Benutzer mittels des Textverarbeitungsterminals 1' übermittelt werden.

Für die Realisierung des erfindungsgemässen Systems können handelsübliche Textverarbeitungsterminals und Telekopierer verwendet werden, wobei die beschriebenen Anschlüsse für die Verbindungsleitungen 35 für unkomprimierte Bilddaten, 36 für die Eingabe von Zeichendaten und 16 bzw. 17 für die Ausgabe von Klassifikator bzw. Zeichendaten am Telekopierer 3 bzw. Textverarbeitungsterminal 1 vorgesehen werden müssen.

Für die Zeichenerkennungseinheit 32 des Textumsetzers 3 kann z.B. eine Einrichtung verwendet werden, wie sie in dem Buch von Dr.-Ing. J. Schürmann, «Polynomklassifikatoren für die Zeichenerkennung», R. Oldenburg Verlag, München, Wien 1977, beschrieben ist. Eine Zeichenerkennungseinheit für die schritthaltende Adaption ist z.B. in der Zeitschrift «Elektronische Rechenanlagen», 20. JG (1978), H. 1, Seiten 15 bis 23 mit Fortsetzung in H. 2, Seiten 65 bis 71 beschrieben.

Die Klassifikatordatenbank des Adaptionslabors und die Bilddatenbank sind Bestandteile eines handelsüblichen Rechensystems.

Als rechnergestütztes Adaptionssystem kann beispielsweise ein nach Anleitung des bereits genannten Buches «Polynomklassifikatoren ...» aufgebautes Programmsystem verwendet werden.

## Patentansprüche

1. Bürokommunikationssystem zur Bearbeitung und/oder Übertragung von Bild- und Textdaten über ein Fernsprechnetz mit einem Telekopierer (2) und einem Textumsetzer (3) (Zeichenerkennungseinheit), dadurch gekennzeichnet, dass der Ausgang des Textumsetzers (3) mit einem Textverarbeitungsterminal (1) verbunden ist, dass der Eingang des Textumsetzers (3) direkt mit dem Telekopierer (2) verbunden ist und dass der Textumsetzer (3) eine mit einem Klassifikatorspeicher (31) im Datenaustausch stehende Zeichenerkennungseinheit (32) enthält.

2. System nach Anspruch 1, dadurch gekennzeichnet, dass der Klassifikatorspeicher (31) als steckbare Einheit ausgebildet ist.

3. System nach Anspruch 1, dadurch gekennzeichnet, dass der Klassifikatorspeicher (31) ein Schreib-Lese-Speicher (RAM) ist und am Textumsetzer (3) ein weiterer Anschluss (16) zum Laden des Schreib-Lese-Speichers vorgesehen ist.

4. System nach Anspruch 3, dadurch gekennzeichnet, dass der Klassifikatorspeicher (31) durch eine in das Textverarbeitungsterminal (1) als Speichermedium einsetzbare Klassifikatordaten enthaltende Diskette (11) ladbar ist.

5. System nach Anspruch 3, dadurch gekennzeichnet, dass der Klassifikatorspeicher (31) durch über das Textverarbeitungsterminal (1) übertragene Klassifikatordaten ladbar ist.

6. System nach Anspruch 5, dadurch gekennzeichnet, dass die Klassifikatordaten von einem Adaptionslabor (AL) mittels einer oder mehrerer vom Benutzer (BKS) über den Telekopierer (2) übertragenen Textseiten ermittelt und dem Benutzer (BKS) über das Textverarbeitungsterminal (1) übertragen werden.

## Claims

1. Office communication system for the processing and/or transmission of picture and text data through a telephone network with a telecopier (2) and a text translator (3) (character recognition unit), characterised thereby, that the output of the text translator (3) is connected with a text processing terminal (1), that the input of the text translator (3) is connected directly with the telecopier (2) and that the text translator (3) contains a character recognition unit (32) standing in data exchange with a classifying store (31).

2. System according to claim 1, characterised thereby, that the classifying store (31) is constructed as pluggable unit.

3. System according to claim 1, characterised thereby, that the classifying store (31) is a read-write store (RAM) and a further connection (16) for the loading of the read-write store is provided at the text translator (3).

4. System according to claim 3, characterised thereby, that the classifying store (31) is loadable through a diskette (11) containing classifying data and insertable as storage medium into the text processing terminal (1).

5. System according to claim 3, characterised thereby, that the classifying store (31) is loadable by classifying data transmitted through the text processing terminal (1).

6. System according to claim 5, characterised thereby, that the classifying data are determined by an adaptation laboratory (AL) by means of one or more text pages transmitted by the user (BKS) by way of the telecopier (2) and transmitted to the user (BKS) by way of the text processing terminal (1).

## Revendications

1. Système de communication pour bureaux pour le traitement et/ou la transmission de données graphiques et textuelles par l'intermédiaire d'un réseau téléphonique, comportant un télécopieur (2) et un convertisseur de texte (3), (unité de reconnaissance des caractères) caractérisé en ce que la sortie du convertisseur de texte (3) est reliée à un terminal de traitement de texte (1); en ce que l'entrée du convertisseur de texte (3) est directement relié au télécopieur (2) et en ce que le convertisseur de texte (3) contient une unité de reconnaissance des caractères (32) qui est en position d'échanger des données avec une mémoire constituant le classificateur (31).

2. Système selon la revendication 1, caractérisé en ce que la mémoire constituant le classificateur (31) est conçue sous forme d'unité enfichable.

3. Système selon la revendication 1, caractérisé en ce que la mémoire constituant le classificateur (31) est une mémoire de lecture/écriture (RAM) et en ce que sur le convertisseur de texte (3) est prévu un autre raccord (16) pour le chargement de la mémoire de lecture/écriture.

4. Système selon la revendication 3, caractérisé en ce que la mémoire constituant le classificateur (31) peut être chargée au moyen d'une disquette (11) contenant les données constituant le classificateur et que l'on peut insérer dans le terminal de traitement de texte (1) comme support de mémoire.

5. Système selon la revendication 3, caractérisé en ce que la mémoire constituant le classificateur (31) peut être chargée au moyen de données constituant le classificateur transmises par l'intermédiaire du terminal de traitement de texte (1).

6. Système selon la revendication 5, caractérisé en ce que les données constituant le classificateur sont établies par un laboratoire d'adaptation au moyen d'une ou plusieurs pages de texte transmises par l'utilisateur par l'intermédiaire du télécopieur (2) et sont transmises à l'utilisateur par l'intermédiaire du terminal de traitement de texte (1).

0 056 948

FIG.1

*TEXTVERARBEIT.-TERMINAL* — 1

12 — M

11 — SP

14 — CPU

15 — TEXTDATEN

Klassifikator-Daten

13

36 — Textdaten

16

*TEXTUMSETZER* — 3

32 — ZE

31 — KLS

35 — Bilddaten, unkomprimiert

## FIG. 2

FIG.3

FIG.4